# FASCICULE DE BREVET EUROPEEN

(11) **EP 1 637 423 B1**
(45) Date de publication et mention de la délivrance du brevet: **24.02.2010**
(21) Numéro de dépôt: 05017553.8
(22) Date de dépôt: 12.08.2005
(51) Int. Cl.: B60T 17/04, B60T 11/26

(54) **Dispositif de liaison pour réservoir de liquide de frein**
Verbindungsschlauch für einen Bremsflüssigkeitsbehälter
Connection hose for a brake fluid reservoir

(30) Priorité: 19.08.2004 FR 0408970
(43) Date de publication de la demande: 22.03.2006
(73) Titulaire: ROBERT BOSCH GMBH, 70442 Stuttgart (DE)
(72) Inventeur: Justaman, Aurélien, 93190 Livry Gargan (FR); Lenczner, Sylvain, 75020 Paris (FR); L'Aot, Jean-Michel, 93240 Stains (FR); Lopez Da Cruz, Nicolas, 93600 Aulnay Sous Bois (FR); Beaures D'Augeres, Olivier, 75020 Paris (FR)
(74) Mandataire: Hurwic, Aleksander Wiktor

(56) Documents cités:
- EP-A- 1 209 054
- WO-A-99/17967
- DE-A1- 10 102 240

## Description

L'invention concerne un dispositif de liaison pour réservoir de liquide de frein et notamment un dispositif de liaison entre réservoir de liquide de frein et maître cylindre.

Il est courant que, dans les véhicules automobiles, le réservoir de liquide de frein soit monté directement sur le maître cylindre du circuit hydraulique de freinage du véhicule. Le réservoir doit donc être adapté au maître cylindre, notamment les sorties du réservoir doivent avoir leurs dimensions et leurs positions adaptées aux accès d'alimentation du maître cylindre. De plus, le réservoir et par suite le maître cylindre qui lui est associé doivent être situés dans des endroits accessibles pour permettre le contrôle visuel du niveau de liquide de frein et pour permettre le remplissage du réservoir en liquide frein.

Pour résoudre ces inconvénients, le réservoir n'est pas monté directement sur le maître cylindre comme décrit dans WO 99/17 967. Des canalisations relient alors la ou les sorties du réservoir aux accès d'alimentation du maître cylindre de freins. Il peut alors être prévu un dispositif collecteur de liquide de frein, monté sur les accès d'alimentation du maître cylindre, pour répartir le liquide de frein entre le circuit primaire et le circuit secondaire du maître cylindre. On peut relier le réservoir de liquide de freins au maître cylindre ou au dispositif collecteur par deux tuyaux distincts d'où il résulte un montage plus long et plus encombrant, ou par un seul tuyau mais dans ce cas, en cas de fuite d'un des circuits de freinage du véhicule, la réserve possible de liquide de frein pour l'autre circuit de freinage n'est simplement constituée que par la partie du collecteur qui alimente ce circuit de freinage.

L'invention permet de résoudre ces inconvénients.

L'invention concerne donc un dispositif de liaison pour réservoir de liquide frein destiné à relier une sortie d'un réservoir de liquide de frein à l'accès d'alimentation du circuit primaire et à l'accès d'alimentation (du circuit secondaire d'un maître cylindre de frein ou à deux accès d'alimentation d'un dispositif collecteur monté sur lesdits accès d'alimentation du maître cylindre. Le dispositif de liaison comporte une canalisation possédant une canalisation principale à laquelle sont connectées deux canalisations dérivées. La canalisation principale possède une extrémité d'accès destinée à être connectée à la sortie du réservoir de liquide de frein et chaque canalisation dérivée possède une extrémité d'alimentation destinée à être connectée chacune à un accès d'alimentation du maître cylindre de freins ou à un accès du dispositif collecteur.

Avantageusement, les deux canalisations dérivées sont raccordées en Y à la canalisation principale.

Egalement, il serait avantageux de prévoir que la séparation entre les canalisations dérivées comporte une membrane de séparation qui se prolonge à l'intérieur de la canalisation principale.

Les différents aspects et caractéristiques de l'invention apparaîtront plus clairement dans la description qui va suivre et dans les figures annexées qui représentent
- les figures 1a et 1b, une vue en perspective du dispositif de l'invention,
- les figures 2a et 2b, des vues de dessus... du dispositif de la figure 1
- les figures 3a et 3b, un exemple de réalisation de la canalisation selon l'invention,
- les figures 4a et 4b, de-s variantes de réalisation de la canalisation selon l'invention.

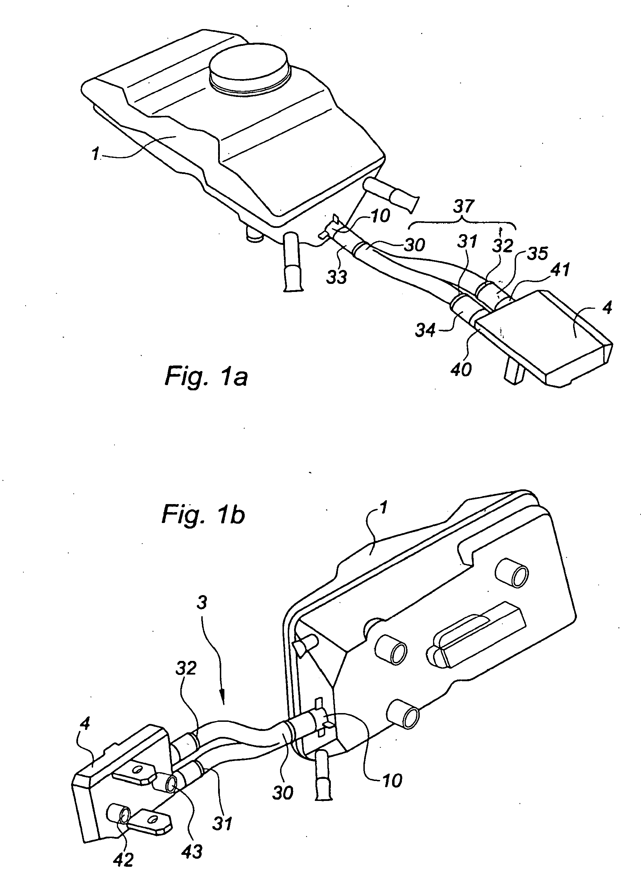

En se reportant à la figure 1, on va donc tout d'abord décrire un exemple de réalisation du dispositif selon l'invention.

La figure 1 représente un réservoir de liquide de frein 1. Un collecteur 4 destiné à être monté sur les accès d'alimentation d'un maître cylindre de frein est relié par une canalisation 3 au réservoir 1.

Selon l'invention, le réservoir n'a qu'une seule sortie d'alimentation 10 reliée au collecteur qui possède deux accès d'alimentation 40 et 41.

La canalisation 3 possède une canalisation principale 30 qui se partage en deux canalisation dérivées ou dérivations 31 et 32. L'extrémité 33 de la canalisation principale est connectée à la sortie 10 du réservoir. Les extrémités 34 et 35 des canalisations dérivées sont connectées chacune à un accès d'alimentation 40, 41 du collecteur 4. Les deux accès d'alimentation 40 et 41 sont donc tous deux alimentés en liquide de frein par le liquide contenu dans le réservoir 1.

La figure 1b représente une vue en perspective de dessous du dispositif de la figure 1a. Sur cette figure 1b, on voit les orifices de sortie 42 et 43 du collecteur 4. Ces orifices sont destinés à être connectés à des accès d'alimentation d'un maître cylindre non représenté sur les figures.

Selon une variante de réalisation non représentée, les extrémités 34 et 35 des canalisations dérivées 31 et 32 pourraient être connectées directement aux accès d'alimentation des circuits primaire et secondaire d'un maître cylindre. Dans ce cas, chaque canalisation dérivée 31 et 32 constitue, pour le circuit de freinage qu'elle alimente, une réserve de liquide frein au cas où l'autre circuit de freinage était défaillant et présentait une fuite.

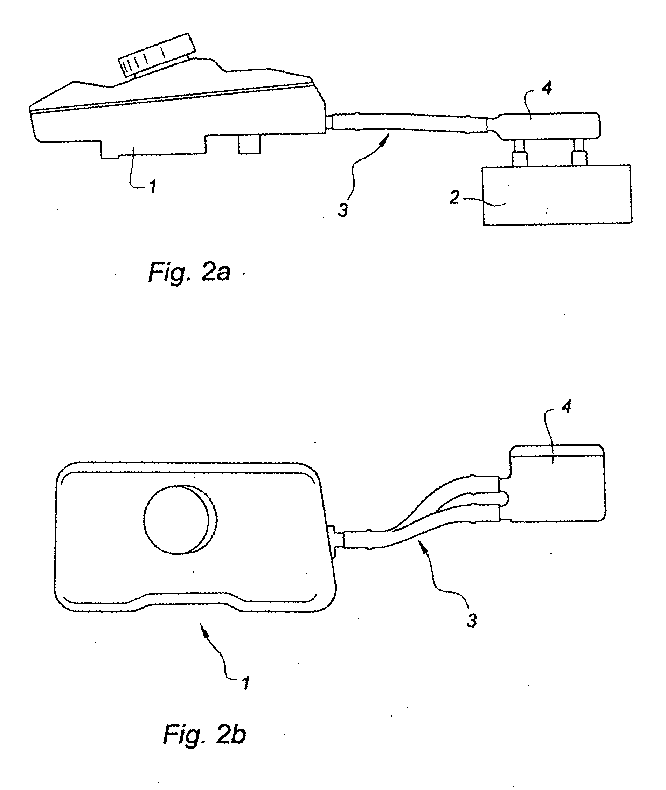

Les figures 2a et 2b représentent respectivement une vue de dessus et une vue de profil du dispositif précédemment décrit. Selon cet exemple de réalisation, la canalisation 4 a ses axes contenus sensiblement dans un plan.

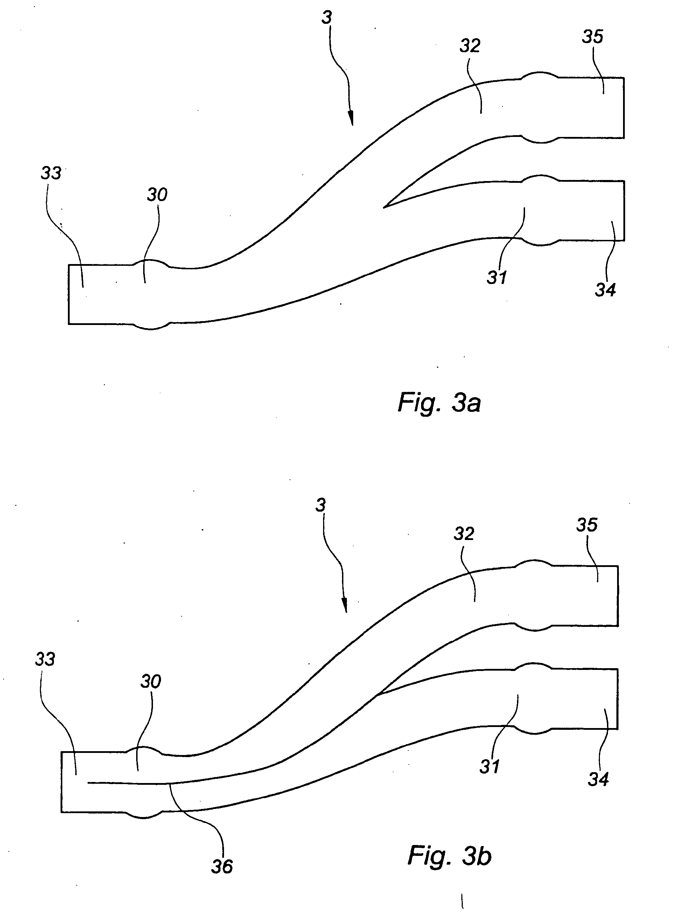

La figure 3a représente la canalisation 4 en vue de coupe. Les deux canalisations dérivées 31 et 32 sont donc raccordées toutes deux à la canalisation principale 30. La séparation entre les deux canalisations dérivées peut comporter une membrane de séparation 36 qui se prolonge vers la canalisation principale voire même à l'intérieur de la canalisation principale comme cela est représenté sur la figure 3b.

En cas de fuite dans l'un des circuits de freinage primaire ou secondaire, le liquide de frein contenu dans le réservoir risque de s'écouler par le circuit défaillant. Par contre, la canalisation de dérivation qui alimente en liquide de frein le circuit de freinage non défaillant servira de réserve pour ce circuit. On peut donc avoir intérêt à prévoir une membrane de séparation 36 qui remonte autant que possible dans la canalisation principale de façon à augmenter cette réserve. En effet, le liquide de frein contenu dans la canalisation dérivée et situé du côté de cette canalisation dérivée par rapport à la membrane de séparation 36 ne pourra pas s'écouler par le circuit défaillant.

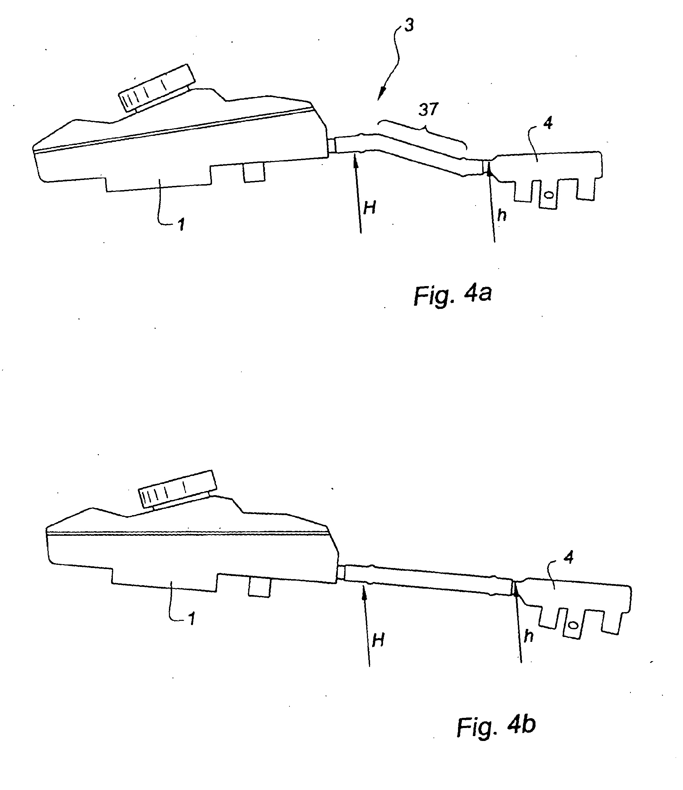

On peut également prévoir comme cela est représenté en figure 4a une canalisation 3 présentant une courbure dans la zone 37 de façon que le réservoir 1 soit un niveau H sensiblement supérieur au niveau h. des accès d'alimentation 40 et 41.

Selon une variante, on peut également prévoir, comme cela est représenté en figure 4b, une configuration dans laquelle le réservoir et le collecteur et/ou le maître cylindre sont inclinés de façon que, comme précédemment, la partie basse de la sortie 10 du réservoir soit à un niveau H supérieur au niveau h de la partie haute des entrées 40 et 41 du collecteur (ou du maître cylindre).

## Revendications

1. Dispositif de liaison pour réservoir de liquide frein destiné à relier une sortie (10) d'un réservoir de liquide de frein (1) à l'accès d'alimentation (20) du circuit primaire et à l'accès d'alimentation (21) du circuit secondaire d'un maître cylindre de frein (2) ou à deux accès d'alimentation (40, 41) d'un dispositif collecteur (4) monté sur lesdits accès d'alimentation du maître cylindre, **caractérisé en ce qu'**il comporte une canalisation (3) possédant une canalisation principale (30) à laquelle sont connectées deux canalisations dérivées (31, 32), la canalisation principale (30) possédant une extrémité d'accès (33) destinée à être connectée à la sortie du réservoir de liquide de frein et chaque canalisation dérivée possédant une extrémité d'alimentation (34, 35) destinée à être connectée chacune à un accès d'alimentation (20, 21) du maître cylindre ou à un accès (40, 41) du dispositif collecteur (4).

2. Dispositif de liaison pour réservoir de liquide frein selon la revendication 1, **caractérisé en ce que** les deux canalisations dérivées (31 et 32) sont raccordées en Y à la canalisation principale (30).

3. Dispositif de liaison pour réservoir de liquide frein selon la revendication 1, **caractérisé en ce que** la séparation entre les canalisation dérivées (31, 32) comporte une membrane de séparation (36) qui se prolonge à l'intérieur de la canalisation principale.

## Claims

1. Connection device for a brake fluid reservoir intended to link an outlet (10) of a brake fluid reservoir (1) to the supply inlet (20) of the primary circuit and to the supply inlet (21) of the secondary circuit of a master brake cylinder (2) or to two supply inlets (40, 41) of a manifold device (4) mounted on the said supply inlets of the master cylinder, **characterized in that** it comprises a pipe system (3) having a main pipe (30) to which two branch pipes (31, 32) are connected, the main pipe (30) having an inlet end (33) intended to be connected to the outlet of the brake fluid reservoir and each branch pipe having a supply end (34, 35) each intended to be connected to a supply inlet (20, 21) of the master cylinder or to an inlet (40, 41) of the manifold device (4).

2. Connection device for a brake fluid reservoir according to Claim 1, **characterized in that** the two branch pipes (31 and 32) are connected in a Y formation to the main pipe (30).

3. Connection device for a brake fluid reservoir according to Claim 1, **characterized in that** the separation between the branch pipes (31, 32) comprises a separation membrane (36) which extends inside the main pipe.

## Patentansprüche

1. Verbindungsvorrichtung für einen Bremsflüssigkeitsbehälter, die dazu vorgesehen ist, einen Auslass (10) eines Bremsflüssigkeitsbehälters (1) mit dem Versorgungseinlass (20) des Primärkreises und mit dem Versorgungseinlass (21) des Sekundärkreises eines Hauptbremszylinders (2) oder mit zwei Versorgungseinlässen (40, 41) einer auf den Versorgungseinlässen des Hauptzylinders angebrachten Sammelvorrichtung (4) zu verbinden, **dadurch gekennzeichnet, dass** sie eine Leitung (3) mit einer Hauptleitung (30) aufweist, mit der zwei Nebenleitungen (31, 32) verbunden sind, wobei die Hauptleitung (30) ein Zutrittsende (33) aufweist, das dazu vorgesehen ist, mit dem Austritt des Bremsflüssigkeitsbehälters verbunden zu sein, und jede Nebenleitung ein Versorgungsende (34, 35) aufweist, das jeweils dazu vorgesehen ist, mit einem Versorgungseinlass (20, 21) des Hauptzylinders oder mit einem Einlass (40, 41) der Sammelvorrichtung (4) verbunden zu sein.

2. Verbindungsvorrichtung für einen Bremsflüssigkeitsbehälter nach Anspruch 1, **dadurch gekennzeichnet, dass** die beiden Nebenleitungen (31 und 32) Y-artig mit der Hauptleitung (30) verbunden sind.

3. Verbindungsleitung für einen Bremsflüssigkeitsbehälter nach Anspruch 1, **dadurch gekennzeichnet, dass** die Trennung zwischen den Nebenleitungen (31, 32) eine Trennmembran (36) umfasst, die sich im Inneren der Hauptleitung fortsetzt.
